# EUROPEAN PATENT SPECIFICATION

(11) **EP 2 319 721 B1**
(45) Date of publication and mention of the grant of the patent: **27.04.2016**
(21) Application number: 10190228.6
(22) Date of filing: 05.11.2010
(51) Int. Cl.: B60K 17/356, B60K 1/00, B60K 1/04, B60K 6/46

(54) **Tractor for moving semitrailers in industrial and/or logistic facilities**
Traktor zum Bewegen von Sattelanhängern in Industrie- und/oder Logistikeinrichtungen
Tracteur pour déplacer des semi-remorques dans des installations industrielles et/ou logistiques

(30) Priority: 09.11.2009 IT VR20090186
(43) Date of publication of application: 11.05.2011
(73) Proprietor: Officina Elettromeccanica di Costa Alberto e Zaninelli Marcello S.N.C., 46014 Castellucchio (MN) (IT)
(72) Inventor: Mantovani, Filippo, 46014 Castellucchio (Prov.of Mantova) (IT)
(74) Representative: Modiano, Micaela Nadia

(56) References cited:
- EP-A1- 0 425 387
- CN-Y- 2 539 658
- GB-A- 638 918
- US-A- 3 708 028
- US-A- 3 773 132
- US-A1- 2007 175 681
- RYUTARO HOSOYA AND KOICHI YAMAGUCHI: "Development of the New Light-Duty Hybrid Truck", SAE TECHNICALPAPER SERIES, no. 2007-01-3478, 5 August 2007 (2007-08-05), - 8 August 2007 (2007-08-08), XP002591527, 14th Asia Pacific AutomotiveEngineering ConferenceHollywood, California, USA ISSN: 0148-7191
- RONALD J. VINCENT ; THOMAS W. NEHL ;MALAKONDAIAH NAIDU: "High Capacity Electric A/C Compressor with Integrated Inverter for Hybrid Automotive and Commercial Vehicles", SAE TECHNICALPAPER SERIES, no. 2008-01-2619, 7 October 2008 (2008-10-07), - 9 October 2008 (2008-10-09), XP002591528, Commercial Vehicle EngineeringCongress & ExhibitionRosemont, Illinois ISSN: 0148-7191

## Description

The present invention relates to a tractor for moving semitrailers in industrial and/or logistic facilities.

Typically, in large industrial or logistic facilities there are specific procedures for moving the semitrailers for which loading and/or unloading is managed.

Typically, the semitrailers to be loaded or unloaded are left by truck drivers in external yards and from there the personnel assigned to internal handling of the industrial or logistic facility move them in order to reposition them, once unloaded and/or reloaded, back in the external yard, so as to allow their return to a truck driver in order to get back on the road.

Semitrailers are generally moved around within facilities by using "old" road tractors equipped with internal combustion engines (typically Diesel engines).

Since moving occurs both in open yards and within buildings or industrial sheds, the use of tractors of this type causes major problems in terms of healthiness of the environments, with the obvious need to use special filters which however are soon found to be substantially ineffective owing to the short routes normally covered and the impossibility of reaching temperatures which are such as to ensure the correct operation of these filters.

Moreover, it has been found that the same problems arise even when "new" tractors are used, precisely because of the specific conditions of use (short time periods and routes, low speeds and considerable acceleration factors).

Lastly, tractors motorized with internal combustion engines are extremely noisy, with an evident increase in noise pollution especially when they are to be moved inside fully or partly enclosed industrial sheds.

Small tractors, powered by electric motors, are also known and used in industrial and logistic facilities and are designed to tow one or more trailers.

However, these tractors cannot be used to tow semitrailers, owing to their construction structure, which does not make it possible to support large vertical loads.

So-called "hybrid" tractors, i.e. tractors provided with an internal combustion engine associated with an electric motor, are also known in other fields of application, such as for example the movement of goods by road. Solutions of this type are described for example in GB 638918, in US 2007/0175681, in CN 2539658, and in the articles in the technical literature titled "Development of the New Light-Duty Hybrid Truck", SAE TECHNICAL PAPER SERIES no. 2007-01-3478, and "High Capacity Electric A/C Compressor with Integrated Inverter for Hybrid Automotive and Commercial Vehicles", SAE TECHNICAL PAPER SERIES no. 2008-01-2619.

However, the use of "hybrid" drive means in industrial or logistic facilities would be difficult to implement and ineffective in solving the above mentioned problems.

Indeed, not only do these vehicles, by entailing the operation of the internal combustion engine under specific operating conditions, not allow polluting emissions to be completely eliminated, but they also require laborious maintenance, since it is necessary to ensure the correct operation both of the electric motor and of the internal combustion engine, with an evident increase in management costs, which are extremely important in the case of the specific application.

Moreover, providing both an electric motor and an internal combustion engine on the same tractor significantly reduces the space to be assigned to management devices and to batteries, with the consequent reduction of the operating range of the electric motor.

A vehicle is furthermore known from EP 0425387 A1 which is constituted by a tractor provided with an internal engine and which can be associated with a semitrailer which is provided with an electric motor in order to allow the movement of the tractor-semitrailer assembly on roads, by means of an internal combustion engine, and by means of the electric motor in areas where it is preferable to avoid the emission of pollutants (for example, in historic city centers).

In the specific field of application of the present invention, this solution, although valid from a conceptual standpoint, is unfeasible since it is necessary to install a respective electric motor on all semitrailers.

An electrically powered vehicle is disclosed in US 3 708 028 that has an electric traction motor supported by a supporting chassis and connected to a rear axle by virtue of kinematic connection means adapted to maintain the transmission of motion between the electric motor and the rear axle when relative position between the rear axle and the supporting chassis varies. The kinematic connection means comprise a Cardan shaft connected at a first end to the differential unit formed on the motorized rear axle and at the other end to the output shaft of the electric traction motor with, interposed between the output shaft of the electric traction motor and the second end of the Cardan shaft, a speed reduction unit. The supporting chassis comprises two longitudinal members which support a supporting structure of the electric traction motor with respective elastic supports for interconnection being interposed between the longitudinal members and the supporting structure. The document US 3 708 028 discloses the closest prior art in accordance with the preamble of claim 1. Further embodiments of the invention are in the dependent claims 2 to 5.

The aim of the present invention is to eliminate or at least drastically reduce the above mentioned drawbacks in known tractors currently in use.

Within this aim, an object of the invention is to obtain a tractor for moving semitrailers or trailers in industrial and/or logistic facilities that makes it possible to eliminate the problems related to pollution, including noise pollution, that arise from the use of traditional tractors.

Another object of the present invention is to devise a tractor for moving semitrailers or trailers in industrial and/or logistic facilities that has a competitive production cost, so as to make its use advantageous also from an economic standpoint.

This aim and these and other objects which will become better apparent hereinafter are achieved by a tractor, according to the invention, that has the features set forth in claim 1. The tractor 1 for moving semitrailers or trailers in industrial and/or logistic facilities, comprises, in general, a supporting chassis 2 provided with a cab 3 and connected, by virtue of respective suspensions, to at least one front axle 4 and to at least one motorized rear axle 5, at the rear part of said supporting chassis 2 there being an engagement element 6 for a semitrailer to be moved, characterized in that it comprises at least one electric traction motor 7, which is supported by said supporting chassis 2 and is connected to said motorized rear axle 5 by virtue of kinematic connection means 8, which are adapted to maintain the transmission of motion between said electric traction motor 7 and said motorized rear axle 5 when the relative position between said motorized rear axle 5 and said supporting chassis 2 varies.

Further characteristics and advantages of the invention will become better apparent from the following detailed description of some preferred but not exclusive embodiments of a tractor 1 for moving semitrailers or trailers in industrial and/or logistic facilities according to the invention, illustrated by way of non-limiting example in the accompanying drawings wherein:
Figure 1 is a perspective view of a tractor for moving semitrailers or trailers in industrial and/or logistic facilities;
Figure 2 is a partial side view of a rear portion of the supporting chassis of the tractor according to the invention;
Figure 3 is a perspective view of what is shown in Figure 2;

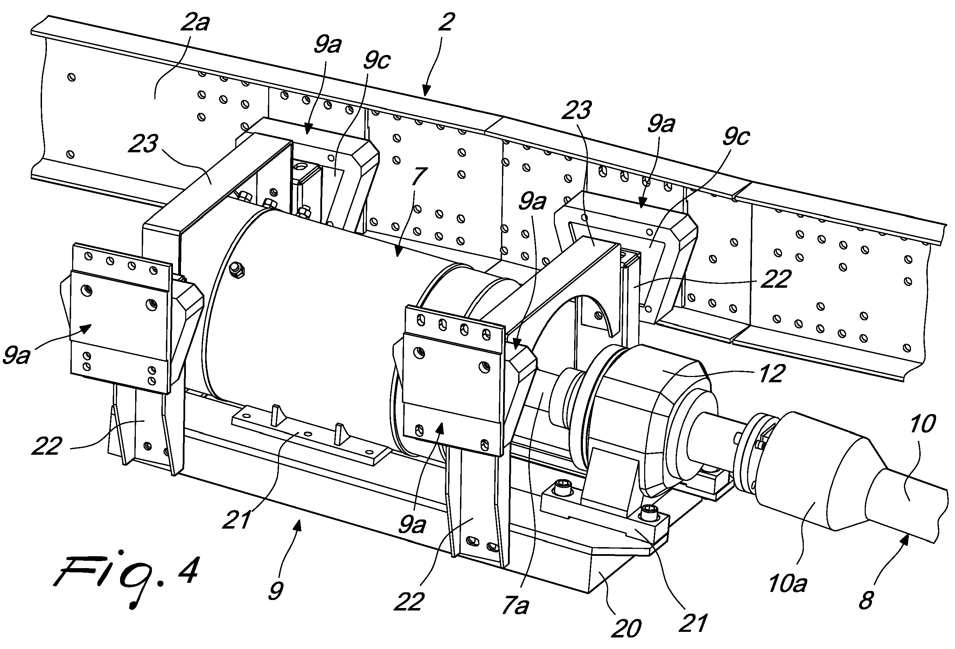

Figure 4 is an enlarged-scale perspective view of the electric motor associated with a tractor according to the invention;
Figure 5 is a partially sectional perspective view of the supporting structure.

In the exemplary embodiments that follow, individual characteristics, given in relation to specific examples, may in reality be interchanged with other, different characteristics which exist in other exemplary embodiments.

Moreover, it is noted that anything found to be already known during the patenting process is understood not to be claimed and to be the subject of a disclaimer.

With reference to the figures, the present invention relates to a tractor, generally designated by the reference numeral 1, particularly for moving semitrailers or trailers in industrial and/or logistic facilities.

The tractor 1 comprises, in particular, a supporting chassis 2 provided with a cab 3 and connected, by virtue of respective suspensions (not shown in the figures), to a front axle 4 and to at least one motorized rear axle 5.

In greater detail, the tractor 1 has, at the rear part of the supporting chassis 2, an engagement element 6 for a semitrailer to be moved.

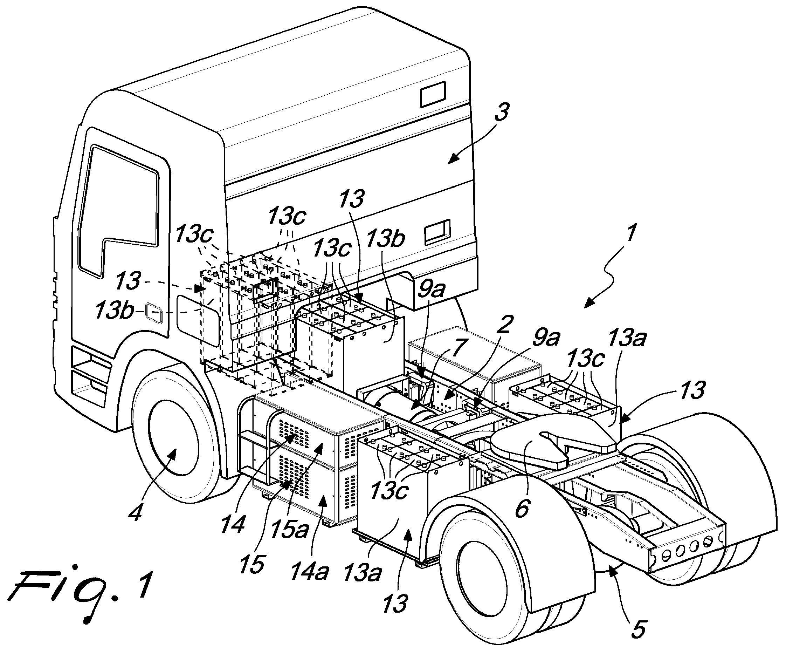

As shown in particular in Figure 1, the engagement element 6 can be constituted by a center bearing provided by a steel plate with a central hole and a dovetail guiding slot for the articulation pivot defined on the semitrailer to be moved.

According to the present invention, the tractor comprises at least one electric traction motor 7, which is supported by the supporting chassis 2, and is connected to the motorized rear axle 5 by virtue of kinematic connection means 8.

In particular, the kinematic connection means 8 are adapted to maintain the transmission of motion between the electric traction motor 7 and the motorized rear axle 5 when the relative position between the rear axle 5 and the supporting chassis 2 varies.

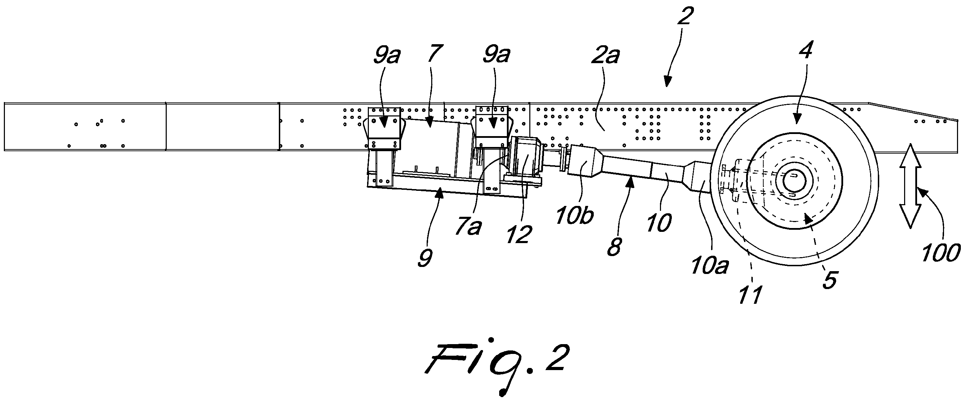

It is in fact normal, during the use of the tractor 1, for a relative displacement to occur (typically along a vertical direction indicated in Figure 2 by the arrow 100) between the rear axle 5 and the supporting chassis 2.

Advantageously, the supporting chassis 2 comprises two longitudinal members 2a and 2b, which run substantially at right angles to the axles 4 and 5 and support a supporting structure 9 of the electric traction motor 7.

Conveniently, the supporting structure 9 is supported at an intermediate portion of the longitudinal members 2a and 2b.

According to a particular aspect of the present invention, respective elastic supports for interconnection 9a are interposed between the longitudinal members 2a and 2b and the supporting structure 9.

In particular, the elastic supports for interconnection 9a can be constituted by an anchoring plate 9e which can be fixed, for example by virtue of fixing bolts, to the respective longitudinal member (2a, 2b) and has a peripheral frame 9b which internally accommodates an elastic supporting body 9c, which in turn forms a receptacle for a respective end portion of a connecting bracket 9d, which is jointly connected to the supporting structure 9.

On a practical level, the elastic supporting body 9c provides an insulation interface that prevents the transfer of any vibrations from the supporting chassis 2 to the supporting structure 9 of the electric traction motor 7 and, similarly, from the electric traction motor 7 toward the supporting chassis 2.

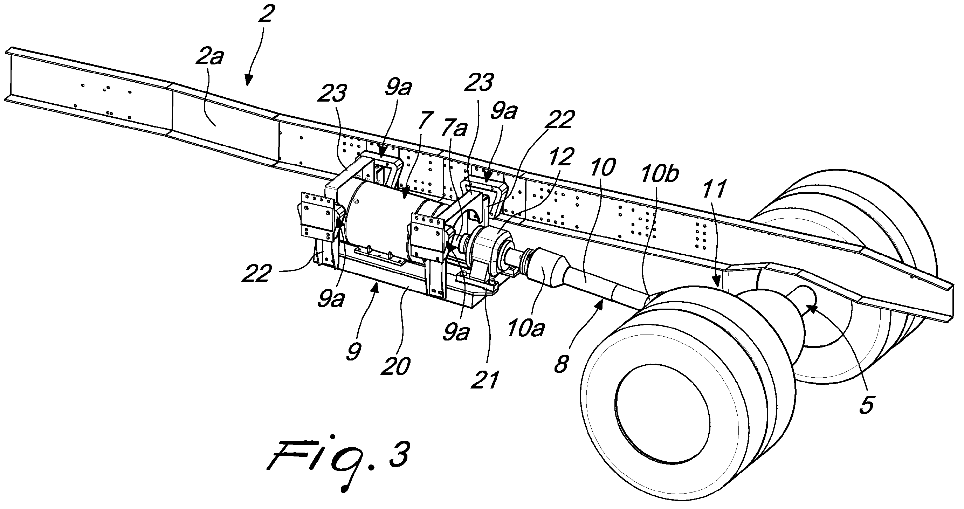

Conveniently, as also shown in Figure 2 and in Figure 3, the kinematic connection means 8 comprise a Cardan shaft 10, which is connected, at a first end 10a, to the differential unit 11 defined on the motorized rear axle 5 and, at the other end 10b, to the output shaft 7a of the electric traction motor 7.

Advantageously, the kinematic connection means 8 comprise, between the output shaft 7a of the electric traction motor 7 and the second end 10b of the Cardan shaft 10, a speed reduction unit 12.

According to a preferred embodiment, the supporting structure 9 comprises a closed cradle-like structure, which supports the electric traction motor 7 and the speed reduction unit 12.

In particular, the connection between the longitudinal members 2a and 2b and the closed cradle-like structure is ensured by virtue of the interposition of four elastic interconnection supports 9a, and preferably two for each longitudinal member 2a and 2b.

The closed cradle-like structure of the supporting structure 9 is constituted, in particular, by a lower fixing base 20, to which the electric traction motor 7 and, if provided, the speed reduction unit 12 are fixed, for example by virtue of fixing footings 21.

The lower fixing base 20 is connected, by virtue of respective anchoring posts 22, to the connecting brackets 9d.

In practice, the electric traction motor 7 is hung, by virtue of the interposition of the anchoring posts 22, from the longitudinal members 2a and 2b so that its occupation of vertical space does not hinder the angular movement of the semitrailer about the articulation pivot along bends.

In order to prevent the supporting structure 9 from being deformed due to the action of the torque generated by the rotation of the electric traction motor 7, there are upper stiffening cross-members 23 which connect the upper ends of the anchoring posts 22, and are arranged on opposite sides with respect to the longitudinal extension of the electric traction motor 7.

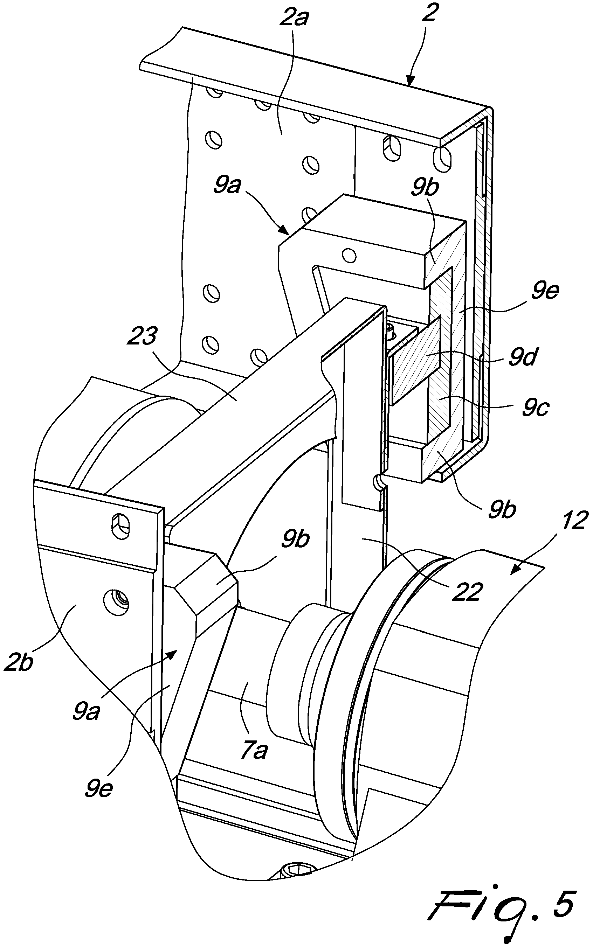

Advantageously, as shown in Figure 5, the upper stiffening cross-members 23 have a bridge-like structure, with the concavity directed toward the electric traction motor 7.

The tractor 1 is further provided with a plurality of modules 13 of power supply batteries 13c, which are mutually connected in series.

The step for recharging the modules 13 of the power supply batteries is ensured by virtue of a recharging device which can be powered by mains current.

In particular, at least one first module 13a is arranged between the front axle 4 and the rear axle 5 and externally to a respective longitudinal member (2a, 2b), while at least one second module 13b is arranged below the cab 3.

Advantageously, the tractor 1 comprises two first modules 13a, each of which is arranged outside a respective longitudinal member 2a and 2b, and two second modules 13b, which are arranged below the cab 3.

Conveniently, the tractor 1 comprises an electric pump 14, which is adapted to supply the hydraulic power-using devices of the tractor 1, and an electric compressor 15, which is adapted to supply the pneumatic power-using devices.

The electric pump 14 and the electric compressor 15 are accommodated in respective cabinets (14a, 15a) which are arranged outside with respect to a longitudinal member 2a, 2b.

The use of a tractor 1 according to the present invention is fully similar to the use of Diesel tractors currently in use.

All the characteristics of the invention that have been indicated above as advantageous, convenient or the like may also be omitted or be replaced with equivalent characteristics.

In practice it has been found that the invention has achieved, in all of its embodiments, its intended aim and objects.

In particular, all the problems related to air pollution and noise pollution are completely eliminated.

Moreover, it has been found that a tractor 1 according to the invention can be provided starting from the supporting chassis of a "classic" tractor motorized with a Diesel engine, even if already used and therefore with an extremely low market value, by removing its engine and gearbox and all the unnecessary accessories and instead installing the electric traction motor 7, the battery modules 13 and the kinematic connection means 8.

In practice the dimensions may be any according to requirements.

All the details may furthermore be replaced with other technically equivalent elements.

The disclosures in Italian Patent Application No. VR2009A000186 from which this application claims priority are incorporated herein by reference.

Where technical features mentioned in any claim are followed by reference numerals and/or signs, those reference numerals and/or signs have been included for the sole purpose of increasing the intelligibility of the claims and accordingly such reference numerals and/or signs do not have any limiting effect on the interpretation of each element identified by way of example by such reference numerals and/or signs.

## Claims

1. A tractor (1) for moving semitrailers or trailers in industrial and/or logistic facilities that is devoid of the combustion engine and its gearbox, comprising:
a supporting chassis (2) provided with a cab (3) and connected, by virtue of respective suspensions, to a front axle (4) and to a motorized rear axle (5), at the rear part of said supporting chassis (2) there being an engagement element (6) for a semitrailer to be moved;
at least one electric traction motor (7), which is supported by said supporting chassis (2) and is connected to said rear axle (5) by virtue of kinematic connection means (8), which are adapted to maintain the transmission of motion between said electric traction motor (7) and said motorized rear axle (5) when the relative position between said rear axle (5) and said supporting chassis (2) varies; wherein said kinematic connection means (8) comprise a Cardan shaft (10) which is connected at a first end (10a) to the differential unit (11) formed on the motorized rear axle (5) and at the other end (10b) to the output shaft (7a) of said electric traction motor (5) with, interposed between said output shaft (7a) of said electric traction motor (7) and said second end (10b) of said Cardan shaft (10), a speed reduction unit (12),
wherein said supporting chassis comprises two longitudinal members (2a, 2b), which support a supporting structure (9) of said electric traction motor (7), respective elastic supports for interconnection (9a) being interposed between said longitudinal members (2a, 2b) and said supporting structure (9), **characterised in that**,
said supporting structure (9) comprising a closed cradle-like structure,
which supports said electric traction motor (7) and said speed reduction unit (12),
and wherein said closed cradle-like structure comprises a lower fixing base (20), onto which said electric traction motor (7) and/or said speed reduction unit (12) are fixed, said lower fixing base (20) being connected, by virtue of respective anchoring posts (22), to brackets (9d)
for connection to respective elastic interconnection supports (9a), said closed cradle-like structure comprising at least one upper stiffening cross-member (23), which connects the upper ends of anchoring posts (22) arranged on opposite sides with respect to the longitudinal extension of said electric traction motor (7), said elastic interconnection supports (9a) being constituted by an anchoring plate (9e) fixed to a respective longitudinal member (2a, 2b) and having a peripheral frame (9b) which internally accommodates an elastic supporting body (9c), which in turn forms a receptacle for a respective end portion of a connecting bracket (9d), which is jointly connected to the supporting structure (9).

2. The tractor (1) according to claim 1, **characterized in that** it comprises a plurality of modules (13) of power supply batteries (13c), which are mutually connected in series, at least one first module (13a) being arranged between said front axle (4) and said rear axle (5) and externally to said at least one longitudinal member (2a, 2b), and at least one second module (13b) being arranged below said cab (3).

3. The tractor (1) according to claim 2, **characterized in that** it comprises two first modules (13a), each of which is arranged outside a respective longitudinal member (2a, 2b), and two second modules (13b), which are arranged below said cab (3).

4. The tractor (1) according to one or more of the preceding claims, **characterized in that** it comprises an electric pump (14), which is adapted to supply the hydraulic power-using devices of said tractor (1), and an electric compressor (15), which is adapted to supply the pneumatic power-using devices of said tractor (1).

5. The tractor (1) according to claim 4, **characterized in that** said electric pump (14) and said electric compressor (15) are accommodated in respective cabinets (14a, 15a), which are arranged outside with respect to a longitudinal member (2a, 2b).

## Patentansprüche

1. Ein Traktor (1) zum Bewegen von Sattelanhängern oder Anhängern in Industrie- und/oder Logistikeinrichtungen, denen der Verbrennungsmotor und ein Getriebe fehlen, Folgendes umfassend:
ein tragendes Fahrgestell (2) ausgestattet mit einem Führerhaus (3) und über entsprechende Aufhängungen mit einer Vorderachse (4) und einer motorisierten Hinterachse (5) verbunden, wobei sich am hinteren Teil des tragenden Fahrgestells (2) ein Eingriffselement (6) für einen zu bewegenden Sattelanhänger befindet;
mindestens einen elektrischen Fahrmotor (7), der von dem tragenden Fahrgestell (2) getragen wird und der mit der Hinterachse (5) über kinematische Verbindungsmittel (8) verbunden ist, die ausgebildet sind, um die Bewegungsübertragung zwischen dem elektrischen Fahrmotor (7) und der motorisierten Hinterachse (5) aufrecht zu erhalten, wenn die Relativposition zwischen der Hinterachse (5) und dem tragenden Fahrgestell (2) variiert; wobei die kinematischen Verbindungsmittel (8) eine Kardanwelle (10) umfassen, die an einem ersten Ende (10a) mit der Differentialeinheit (11) verbunden ist, die an der motorisierten Hinterachse (5) geformt ist, und am anderen Ende (10b) mit der Ausgangswelle (7a) des elektrischen Fahrmotors (7) mit einer Drehzahlreduktionseinheit (12), die zwischen der Ausgangswelle (7a) des elektrischen Fahrmotors (7) und dem zweiten Ende (10b) der Kardanwelle (10) angeordnet ist,
wobei das tragende Fahrgestell zwei längliche Glieder (2a, 2b) umfasst, die eine tragende Struktur (9) des elektrischen Fahrmotors (7) tragen, wobei entsprechende elastische Stützen zur gegenseitigen Verbindung (9a) zwischen den länglichen Gliedern (2a, 2b) und der tragenden Struktur (9) angeordnet sind, **dadurch gekennzeichnet, dass**
die tragende Struktur (9) eine geschlossene schlittenartige Struktur umfasst, die den elektrischen Fahrmotor (7) und die Drehzahlreduktionseinheit (12) trägt,
und wobei die geschlossene schlittenartige Struktur eine untere Befestigungsbasis (20) umfasst, auf welcher der elektrische Fahrmotor (7) und/oder die Drehzahlreduktionseinheit (12) befestigt sind, wobei die untere Befestigungsbasis (20) über entsprechende Verankerungsstützen (22) mit Bügeln (9d) zur Verbindung mit entsprechenden elastischen Verbindungsträgern (9a) verbunden ist, wobei die geschlossene schlittenartige Struktur mindestens einen oberen Versteifungsquerträger (23) umfasst, der die oberen Enden der Verankerungsstützen (22) verbindet, die auf gegenüberliegenden Seiten mit Bezug auf die Längsausdehnung des elektrischen Fahrmotors (7) angeordnet sind, wobei die elastischen Verbindungsträger (9a) aus einer Verankerungsplatte (9e) bestehen, die an einem entsprechenden Längsglied (2a, 2b) befestigt ist und einen peripheren Rahmen (9b) hat, welcher innen einen tragenden elastischen Körper (9c) aufnimmt, welcher wiederum ein Aufnahmeelement für einen entsprechenden Endabschnitt eines Verbindungsbügels (9d) bildet, der fest mit der tragenden Struktur (9) verbunden ist.

2. Der Traktor (1) gemäß Anspruch 1, **dadurch gekennzeichnet, dass** er eine Vielzahl von Modulen (13) von Stromversorgungsbatterien (13c) umfasst, die seriell miteinander verbunden sind, wobei mindestens ein erstes Modul (13a) zwischen der Vorderachse (4) und der Hinterachse (5) und außerhalb des mindestens einen Längsgliedes (2a, 2b) angeordnet ist, und wobei mindestens ein zweites Modul (13b) unter dem Führerhaus (3) angeordnet ist.

3. Der Traktor (1) gemäß Anspruch 2, **dadurch gekennzeichnet, dass** er zwei erste Module (13a) umfasst, die jeweils außerhalb eines entsprechenden Längsgliedes (2a, 2b) angeordnet sind, und zwei zweite Module (13b) die unter dem Führerhaus (3) angeordnet sind.

4. Der Traktor (1) gemäß einem oder mehreren der obigen Ansprüche, **dadurch gekennzeichnet, dass** er eine Elektropumpe (14) umfasst, die ausgebildet ist, um die hydraulische Kraft nutzenden Vorrichtungen des Traktors (1) zu versorgen, und einen elektrischen Kompressor (15) der ausgebildet ist, um die pneumatische Kraft nutzenden Vorrichtungen des Traktors (1) zu versorgen.

5. Der Traktor (1) gemäß Anspruch 4, **dadurch gekennzeichnet, dass** die Elektropumpe (14) und der elektrische Kompressor (15) in jeweiligen Gehäusen (14a, 15a) untergebracht sind, die außerhalb eines Längsgliedes (2a, 2b) angeordnet sind.

## Revendications

1. Tracteur (1) pour déplacer des semi-remorques ou des remorques dans des installations industrielles et/ou logistiques, qui est dépourvu d'un moteur à combustion et de sa boîte de vitesses, comprenant :
un châssis de support (2) muni d'une cabine (3), et relié, à l'aide de suspension respectives, à un essieu avant (4) et à un essieu arrière motorisé (5), et, à la partie arrière dudit châssis de support (2), se trouvant un élément d'engagement (6) pour une semi-remorque devant être déplacée ;
au moins un moteur de traction électrique (7), qui est supporté par ledit châssis de support (2) et qui est relié audit essieu arrière (5) à l'aide de moyens de liaison cinématiques (8), qui sont adaptés de façon à maintenir la transmission de mouvement entre ledit moteur de traction électrique (7) et ledit essieu arrière motorisé (5) lorsque la position relative entre ledit essieu arrière (5) et ledit châssis de support (2) varie ;
dans lequel lesdits moyens de liaison cinématiques (8) comprennent un arbre à cardan (10) qui est relié, à une première extrémité (10a), à l'unité de différentiel (11) formée sur l'essieu arrière motorisé (5), et, à l'autre extrémité (10b), à l'arbre de sortie (7a) dudit moteur de traction électrique (7), avec, interposée entre ledit arbre de sortie (7a) dudit moteur de traction électrique (7) et ladite deuxième extrémité (10b) dudit arbre à cardan (10), une unité de réduction de vitesse (12),
dans lequel ledit châssis de support comprend deux éléments longitudinaux (2a, 2b), qui supportent une structure de support (9) dudit moteur de traction électrique (7), des supports élastiques respectifs pour une interconnexion (9a) étant interposés entre lesdits éléments longitudinaux (2a, 2b) et ladite structure de support (9), **caractérisé en ce que** :
ladite structure de support (9) comprend une structure en forme de berceau fermé, qui supporte ledit moteur de traction électrique (7) et ladite unité de réduction de vitesse (12),
et dans lequel ladite structure en forme de berceau fermé comprend une base de fixation inférieure (20), sur laquelle sont fixés ledit moteur de traction électrique (7) et/ou ladite unité de réduction de vitesse (12), ladite base de fixation inférieure (20) étant reliée, à l'aide de montants d'ancrage respectifs (22), à des étriers (9d) pour une liaison avec les supports d'interconnexion élastiques respectifs (9a), ladite structure en forme de berceau fermé comprenant au moins un élément transversal de raidissage supérieur (23), qui relie les extrémités supérieures de montants d'ancrage (22) disposés sur des côtés opposés par rapport à l'étendue longitudinale dudit moteur de traction électrique (7), lesdits supports d'interconnexion élastiques (9a) étant constitués par une plaque d'ancrage (9e) fixée à un élément longitudinal respectif (2a, 2b), et comportant un bâti périphérique (9b) qui reçoit intérieurement un corps de support élastique (9c), qui constitue lui-même un réceptacle pour une partie d'extrémité respective d'un étrier de liaison (9d), qui est réuni conjointement à la structure de support (9).

2. Tracteur (1) selon la revendication 1, **caractérisé en ce qu'**il comprend une pluralité de modules (13) de batteries d'alimentation (13c), qui sont mutuellement connectés en série, au moins un premier module (13a) étant disposé entre ledit essieu avant (4) et ledit essieu arrière (5) et extérieurement audit au moins un élément longitudinal (2a, 2b), et au moins un deuxième module (13b) étant disposé en dessous de ladite cabine (3).

3. Tracteur (1) selon la revendication 2, **caractérisé en ce qu'**il comprend deux premiers modules (13a), dont chacun est disposé à l'extérieur d'un élément longitudinal respectif (2a, 2b), et deux deuxièmes modules (13b), qui sont disposés en dessous de ladite cabine (3).

4. Tracteur (1) selon l'une ou plusieurs des revendications précédentes, **caractérisé en ce qu'**il comprend une pompe électrique (14), qui est adaptée de façon à alimenter les dispositifs utilisant une énergie hydraulique dudit tracteur (1), et un compresseur électrique (15), qui est adapté de façon à alimenter les dispositifs utilisant une énergie pneumatique dudit tracteur (1).

5. Tracteur (1) selon la revendication 4, **caractérisé en ce que** ladite pompe électrique (14) et ledit compresseur électrique (15) sont reçus dans des enceintes respectives (14a, 15a), qui sont disposées à l'extérieur par rapport à un élément longitudinal (2a, 2b).
